# EUROPEAN PATENT APPLICATION

(11) **EP 3 626 083 A1**
(43) Date of publication of application: **25.03.2020**
(21) Application number: 19386039.2
(22) Date of filing: 17.09.2019
(51) Int. Cl.: A23N 1/00, B30B 9/02

(54) **BY ROAD MOVABLE LABORATORY JUICING CACTUS FRUITS AND SHOOTS BY THE METHOD OF HYDRAULIC DIRECT COLD PRESS**

(30) Priority: 18.09.2018 GR 20180100424
(71) Applicant: Tzanakakis, Stylianos, 741 32 Rethymno Crete (GR)
(72) Inventor: Tzanakakis, Stylianos, 741 32 Rethymno Crete (GR)

(57) **Abstract**

This invention concerns on one hand a new method for juicing cactus fruits & shoots, the one of hydraulic direct cold press and on the other hand a new design for a complete juicing laboratory that is by road movable and utilize the new method.

## Description

This invention concerns on one hand a new method of juicing cactus fruits and shoots - the one of hydraulic direct cold press, and on the other hand a complete by road movable laboratory of juicing cactus fruits and shoots utilizing the new method , whose machinery and equipment are appropriately arranged and housed in a specially designed metal container, able to be transported (self-moving or on trailer) and be installed in the fields of Cactus plants.

Regarding the juicing of cactus fruits and shoots, today there are various industrial and home destined processes which make use of technologies ranging from rotary cutting & scrabing equipment to rotary scraping perforated drums, but there are no hydraulic compression processes in which there is complete absence of any rotary element in contact with the processed matter.

In the juice market for nutritional / cosmetic and Pharmaceutical purposes is known the value of those juices produced by processes where the overall processing temperature is kept very low, since this low temperature ensures the preservation of the qualitative substances of the juices that induce the nutritional / cosmetic and pharmaceutical value. However, also known is the importance of the total juicing time from the time of harvest to the beginning of the juicing process, finding that the shorter is the time, for the same sample of fruits and shoots and the same processing conditions (processing space light, humidity , aeration and temperature), then the higher is the concentrations of qualitative attributes that confer nutritional / cosmetic and medicinal value.

During the Jucing processes, there must be faced among others the problem of solid and liquid waste management. This need for facing this problem has become now imperative.

Until today, the management of rinsing and washing water of fruits at the beginning of the juicing process, includes partial recycling during the washing phase and their disposal to the municipal sewer system. So the liquid residues / wastes for the juicing processes used to be a fundamental problem for local Environmental and Municipal authorities .
Only recently has begun the change on the perception that liquid residues should cease to be treated as waste but as a source of super - valuable substances , on the one hand for the use in the field as a fertilizer or for feeding of the animals that live there, and on the other as a food for human. Of particular importance is the separation of the seeds from the solid residue of the cactus fruits juicing process, for their further processing in order to produce pharmaceutical and cosmetic oils.

The method of hydraulic direct cold press of cactus fruits and shoots will produce the highest quality juices, while at the same time with the use of this method by the movable juicing laboratories of innovating design (a) it will become possible for the washing water to be utilized for irrigation in the fields of cactus plants and (b) it will become possible for the solid waste of juicing process one hand to be disposed directly in the fields as fertilizer or for animal feed and on the other hand to be further processed for the separation and collection of the valuable substances for pharmaceutical and cosmetic products.

As an example, today the juicing method of prickly pear (which is a fruit of the genus Upundia), comprises the following steps: (a) Unloading the fruits (b) Checking and removing of inappropriate fruits (c) Storage of fruits (d) Washing of fruits with high dynamic pressure water jet, on the one hand for cleaning and on the other hand for partially removing the thorns on the fruits (e) removal of residual thorns by scrubbing cactus fruits with rotary brushes (f) instead of removing the thorns, removing of the whole fruit peel (g) pulpy juicing of fruits (without removing the seeds) in closed cylinders with rotating cutters or rotating perforated drums (h) 1^{st} stage filtration of the pulpy juice to remove most of the chopped seeds and big sized peel pieces, mainly when rotary cutters technology is used (i) 2^{nd} stage filtration (j) Bulk conservation of juices in Tanks (i) Bottling and (k) Storage.
As an example , today the juicing method of prickly pear shoots, comprises the following steps: (a) Unloading the shoots (b) Checking and removing of inappropriate shoots (c) Storage of shoots (d) Washing of shoots with high dynamic pressure water jet, on the one hand for cleaning and on the other hand for partially removing the thorns on the shoots (e) complete removal of shoot bark with specially designed scrubbers or my hands (in small juicing units or for home use) (f) pulpy juicing either in closed cylinders with rotating cutters or in perforated rotating drums (h) 1^{st} stage filtration of the pulpy juice followed by 2^{nd} stage filtration for removal medium sized solid pieces (mainly residues from shoot peeling) (i) Bulk conservation of juices in Tanks (j) Bottling and (k) Storage.

The basic criteria for the juices are: (a) the total and individual concentrations of minerals, vitamins, proteins and carbohydrates (b) the oxidation of the juices caused by the action of enzymes, oxygen, light and heat (c) the color and (d) the organoleptic characteristics such as the odor and the taste. Especially the oxidation, which also constitutes a fundamental qualitative characteristic for all juices applications, this is mainly determined on the one hand by the quality of the fruits at the time of juicing, and on the other by the time and conditions of the juicing process (as correlated mainly with the time of impact of the atmospheric air and the light). The quality of the fruits in turn is directly related to (a) the storage conditions with adequate ventilation and absence of lighting (b) the avoidance to damage the peel of the fruits and bark of the shoots and (c) the minimization of the time between the harvesting and juicing phases (the minimization of which time is also one of the fundamental advantages of the claimed technological invention for by road movable laboratories).

The object of this invention is twofold and concerns on the one hand a new method of juicing cactus fruits and shoots and on the other hand the possibility for this new juicing method to be implemented by a Technology which is incorporated into completely functional by road movable laboratories, so for the juicing process to take place in the fields of cactus plants.

The intended purpose of the applicant for the above object of the invention is (a) the production of top quality juices from cactus fruits and shoots, avoiding to remove the peel of the fruits, the bark of the shoots , the thorns of fruits & shoots and the seeds of the fruits but also (b) the rationalistic facing of the environmental problem (as it was considered until recently) of juicing process solid waste / residues and washing water management , by its direct disposal to the ground, and (c) the possibility for the solid waste/residues to be further utilized by industrial units for the recovery of fruit seeds, for the production of pharmaceutical and cosmetic organic oils .

The twofold object of the invention is achieved (A) by one suitably designed method of "cold" juicing, where it will be possible for the fruits and shoots of cactus plants to be directly juiced without removing the peel/bark and the thorns , by applying hydraulic compression inside a properly designed high pressure slotted and/or perforated compression cylinder (B) with a suitably designed completely functional and by road movable juicing laboratory of any type of cactus fruit and bark , utilizing the above new juicing method and where (b1) the produced juices from fruits and shoots will be stored inside specially designed cooled tanks installed in the metallic container (b2) the juicing of fruits and the juicing of shoots will be made utilizing the same machinery (hydraulic press , washing machine , filtration machine etc.) and Equipment (Tanks etc.) (b3) the solid residues / waste, when it is preferred not to be disposed in the field if cactus plants, will be stored inside suitably designed tanks in the metallic container, for their further exploitation by industrial units where the seeds will be collected for the production of organic oils and (b4) the processing machinery will be electrically powered.

With respect to the stainless steel compression cylinder of hydraulic press (YP), in which takes place the high pressure compression of fruits and shoots, it will be either perforated or with vertical slots over the whole of its surface. Depending on the maturity of the fruits, and the liquid content of the shoots, it will be depended (a) whether the fruits and shoots (during their independent juicing processes) will be placed directly into the compression cylinder (for mature fruits and succulent shoots) or (b) whether the fruits and the chopped shoots will be placed prior into a suitably made fabric sack (made of fabric suitable for micro-flirtation and destined for food industry), which sack will then be placed inside the compression cylinder.

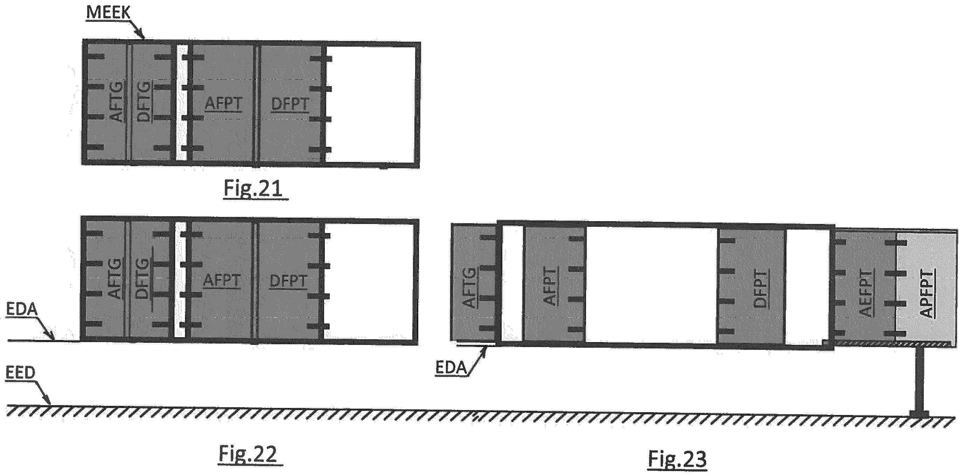

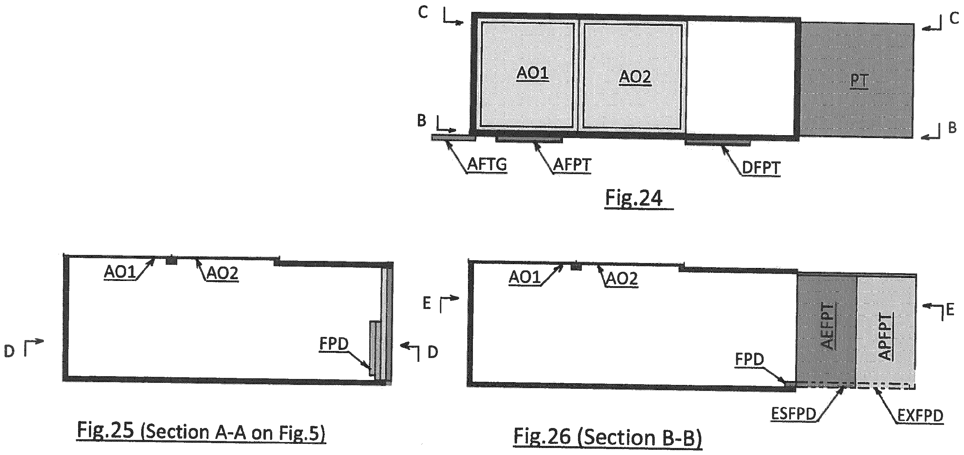

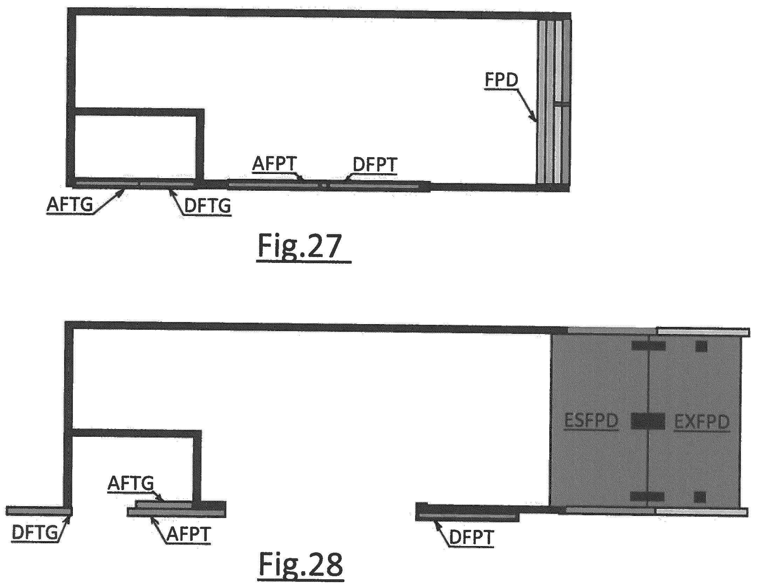

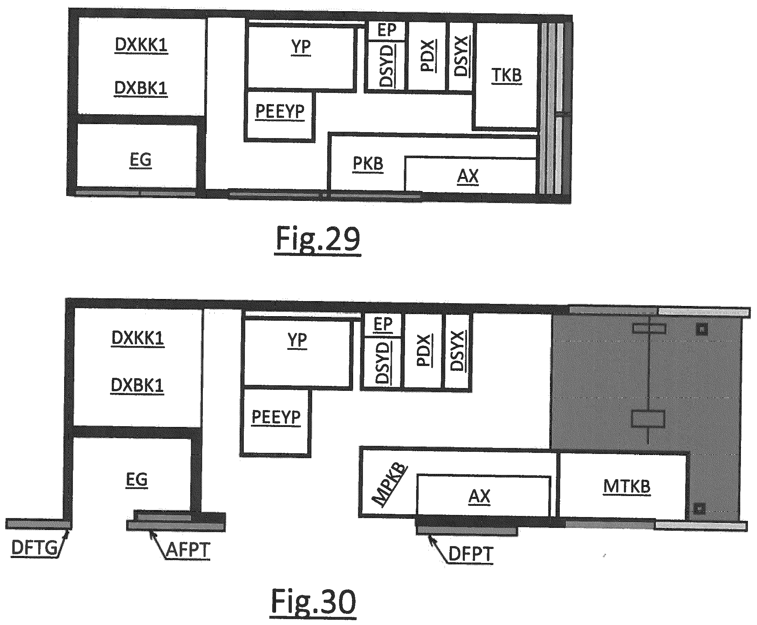

In a specific variant of the method of the invention, it will be possible for the hydraulic press (YP) to be designed so that the stainless steel compression cylinder (perforated and/or slotted) will be replaced by specially designed sacks of high pressure capacity (made from micro-filtration fabric) . In this way the fruits and chopped shoots will be directly placed inside the sack (without afterwards for the sack to be placed inside any compression cylinder), which then will be placed on a specially designed stainless steel holder at the basis hydraulic press (which holder will be aligned with he axis of the hydraulic piston. In this way the sack will be compressed directly from the surfaces of the hydraulicaly moving piston head plate and the sack holder.
In a specific variant of the laboratory of the invention, it is possible to modify the container appropriately so that in accordance with the attached Fig. 21 to Fig. 30 an Electric Generator (EG) to be installed in the place of the two(2) out of four(4) juice daily storage tanks . The generator will be of appropriate capacity and will be installed inside a confined space that is determined by specially designed fire rated partitions and side openings / doors) of appropriate capacity. This modification, while depriving part of the processing capacity (in terms of the ability to self-transport of the produced juices), nevertheless provides the movable laboratory with the ability to self-transport the required electrical generator (so that it is not transported by a separate wheeled vehicle).

Also, in a particular variant of the laboratory of the invention, the degree of separation of the produced juices may be varied based on the appropriate design of the dimensions and the number of storage tanks. The degree of separation will be depended on the geographical area of activity for the laboratory of the invention, since in case of operating in areas with small lots, there will be probably the need to separate the juices produced daily from different fields or even from the same, where however the variety cactus plants may be different.

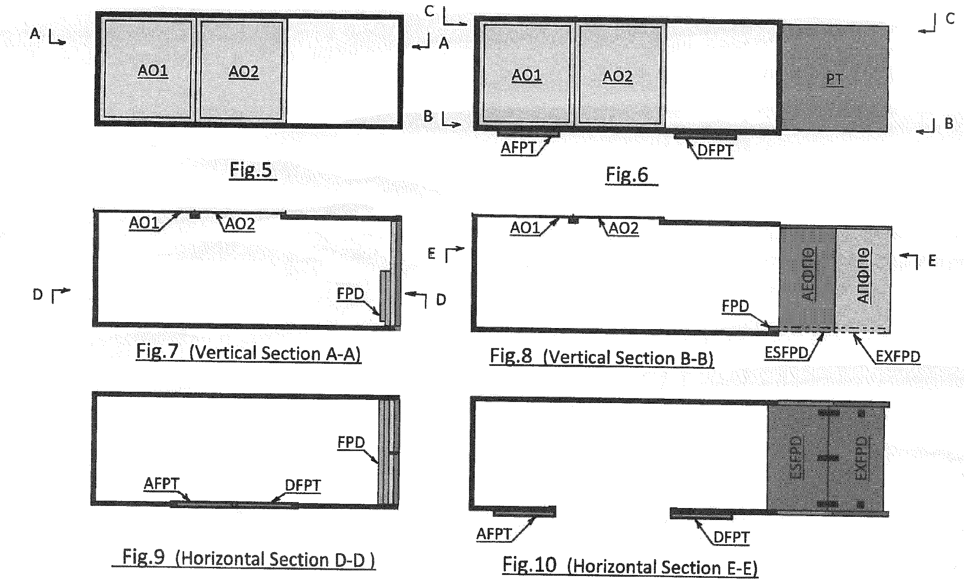

Also, in a specific variation of the laboratory of the invention and in accordance with the attached drawings Fig. 6 to Fig. 10, the number of foldable floor panels and of foldable door leaves of the rear double-leaf door may vary, depending on the size of the extended foldable processing space of fruits and shoots that is desired to be create. For example, the foldable floor may consist of a total of three panels and each leaf of the rear double-sided door may have two inner foldable leaves/panels, but in the processing, area may have been selected to open / expanded only the two floor panels and one inner leaf of the rear door.

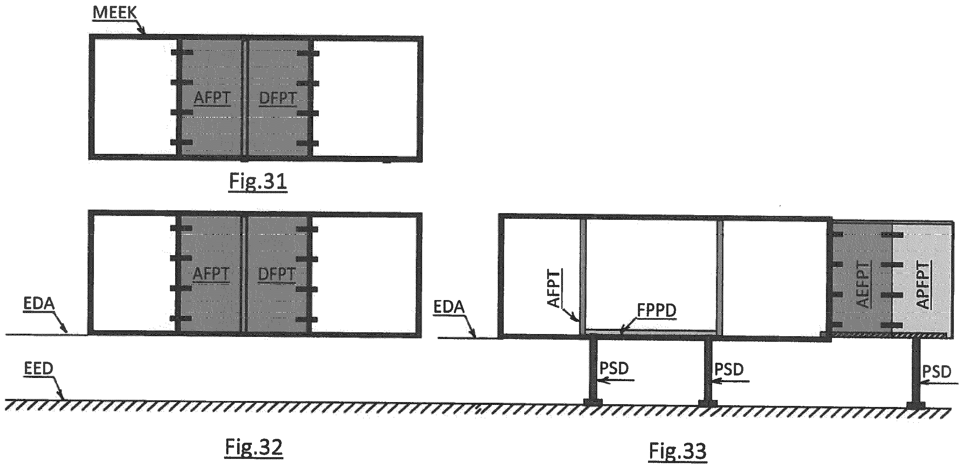

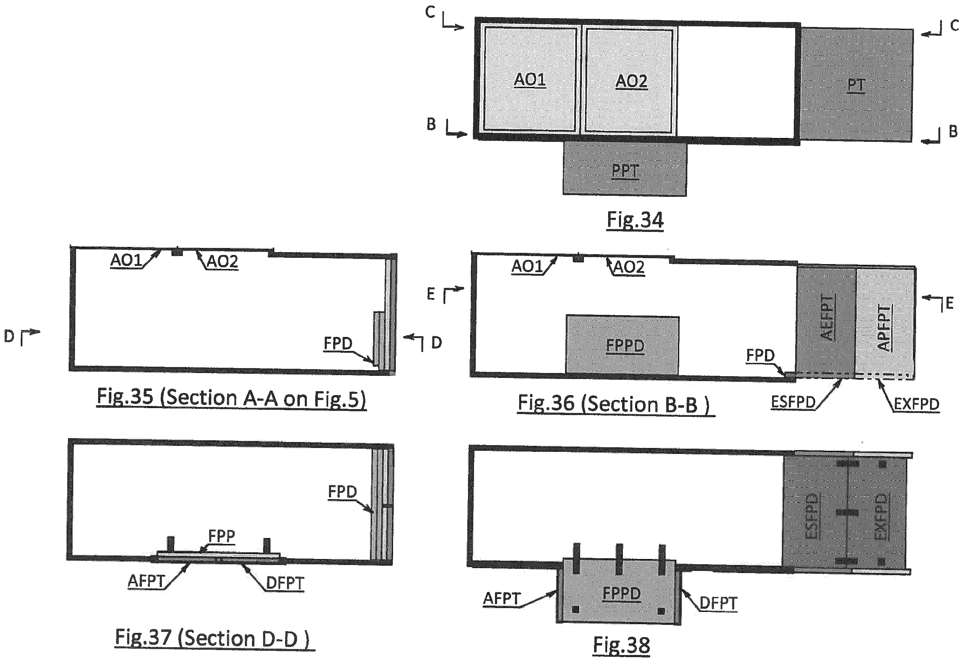

Also in a particular variant of the laboratory of the invention can be added a foldable floor and inner foldable leaves at the side double-leaf door, in accordance with the attached drawings Fig. 33 to Fig. 38. The purpose of this variant will be the capability for the laboratory to have (when needed) a foldable covered area in front of the side double-leaf door, in order on one hand to facilitate the process of juicing especially when housing more than one hydraulic presses (YP) and on the other hand to prevent rain water entering into the main processing area (Hydraulic Press /YP room) during days of heavy rainfall.

Also, in a particular variant of the laboratory of the invention, a foldable electric winch can be added whose arm will be suitably supported on the roof of the rear door, and with its telescopic extension to assist the loading of the raw material from the ground to the level of side folding floor.

Also, in a particular variant of the laboratory of the invention, there is the possibility for the metallic container to be equipped with a heat pump to continuously maintain the temperature of the process area at desired levels.

Finally, in particular variant of the laboratory of the invention, the metallic container may be of varying length (depending on the processing capacity), from the two(2) meters to the maximum allowed for road transport, wherein in these variants it is possible to install more than one hydraulic press (YP) as well as more than four tanks of juices and more than two tanks for storing solid residues (to be transferred to processing units for the collection of seeds).

The understanding of the invention will be made possible through the presented indicative plans of front/top & side views and sections (Fig. 1 to Fig. 38) as well as the production diagrams (Fig. 39 and Fig. 40).

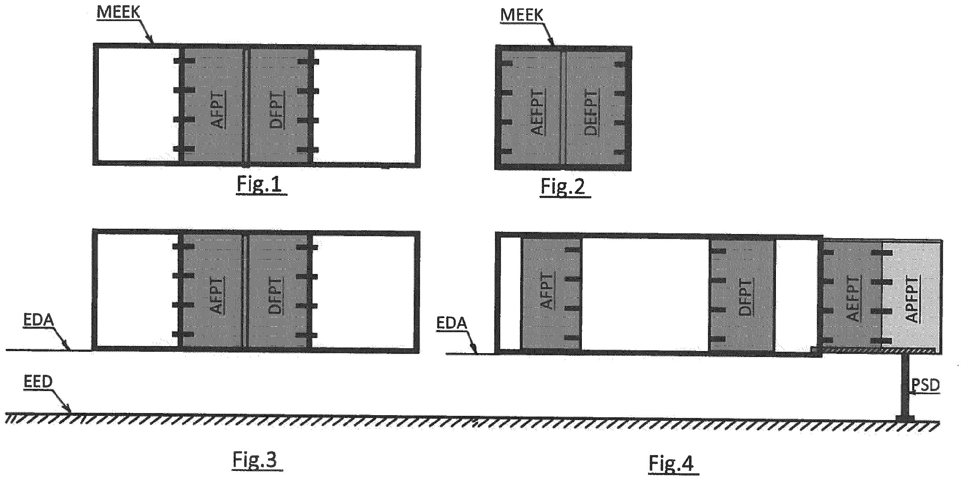

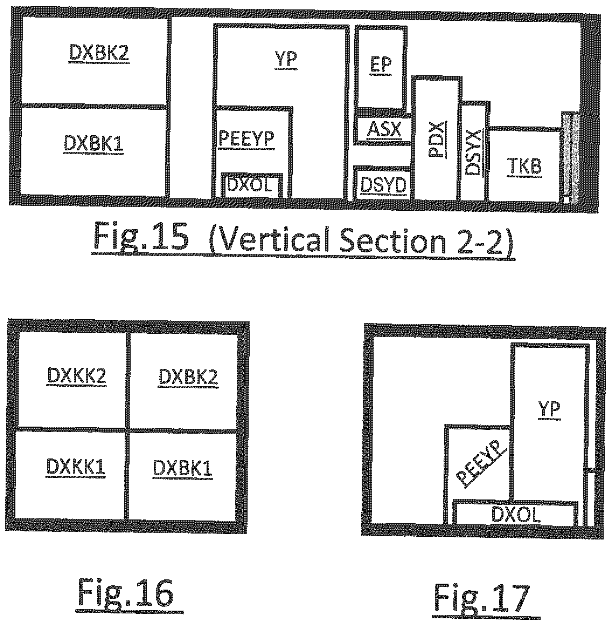

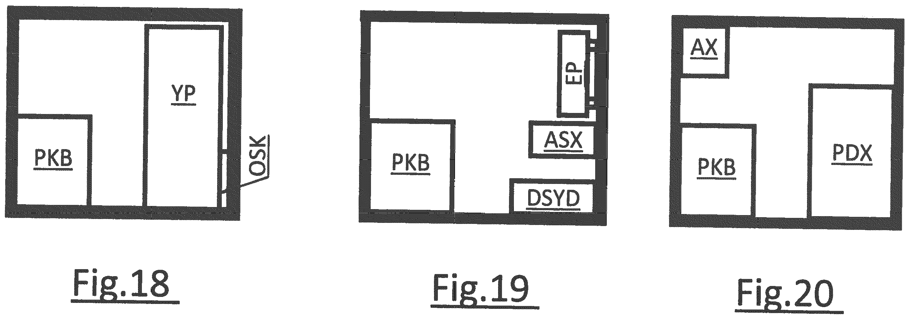

The coding of the Equipment, Machinery and of other components constituting the movable laboratory, as used in Figures 1 to 40, is as follows:
(MEEK): Metal container.
(AFPT): Left side door leaf.
(DFPT): Right side door leaf.
(AEFPT): Left rear door external leaf.
(DEFPT): Right rear door external leaf.
(APFPT): Left foldable rear door leaf.
(DPFPT): Left foldable rear door leaf (not shown in the drawings)
(ESFPD): Internal foldable floor panel (for rear door)
(EXFPD): External Foldable Floor Panel (for rear door)
(FPD): Foldable Floor Panels (for rear door)
(FPPD): Foldable Floor Panels (for side door)
(AFTG): Generator room left door leaf
(DFTG): Generator room right door leaf
(PSD): Foldable floor stand (foldable floors)
(AO1): Roof opening (for tanks)
(AO2): Roof opening (for hydraulic press)
(PT): Foldable tent (for rear door)
(PPT): Foldable tent (for side door)
(YP): Hydraulic Press
(PEEYP): Hydraulic Press Platform for the input of processing matter and for the output of solid waste/residues
(DSYX): Solid residue Storage tank after Fruit & Shoot hydraulic compression
(PKB): Fruits and Shoots Washing Machine
(MPKB): Shifted Fruits and Shoots Washing Machine (during operation)
(TKB): Fruits and Shoots Shredder
(MTKB): Shifted Fruits and Shoots Shredder
(AX): Storage Area (Measuring & Quality Controls Instruments, Tools & Documents)
(EP): Electrical Distribution Board
(EG): Electric Generator
(DXOL): Hourly operation Juice storage tank
(DSYD): Solid residue storage tank after 1^{st} stage filtration
(PDX): 1^{st} Stage filtration machine for Fruit & Shoot juices.
(DXKK1): Daily Operation Cactus fruits Juice storage tank (Cooled)
(DXKK2): Daily Operation Cactus fruits Juice storage tank (Cooled)
(DXBK1): Daily Operation Cactus shoots Juice storage tank (Cooled)
(DXBK2): Daily Operation Cactus shoots Juice storage tank (Cooled)
(OSK): Pipe & Cable Route (suitably formed channels behind the hydraulic press)
(BE): Basic choice (for the process of the product or residue).
(EE): Alternative choice (for process of the product or residue).
(KF): Prickly pear fruit
(BF): Prickly pear shoot
(FEY): Inner matter
(NP): Washing water
(MANP): Non-Recyclable washing water (after completion of the possible recycling number if recycling is desired)
(XO): Land / Soil
(SYXK): Fruit juicing solid residue
(SYXB): Shoot juicing solid residue
(SYD): Solid residue from 1^{st} stage filtration machine
(ASX): Juice pumping system
(MESYX): Processing Unit of juicing solid waste/residue.
(PYF): Raw Matter for pharmaceutical Industry
(ZO): Fodder
(MEMX): Industrial Unit for subsequent Processing (to Market Products) of produced juices by the movable laboratory.
(EDA): Floor Level
(EED): Ground Level

However, the invention is explained in more details on the basis of a representative example for the operation of the by road movable laboratory which concerns the juicing process of prickly pear fruit (KF), in which example is revealed on one hand the invention objective of producing high quality juices and, on the other hand the invention objective of solving the problem of sold residue and washing water management.

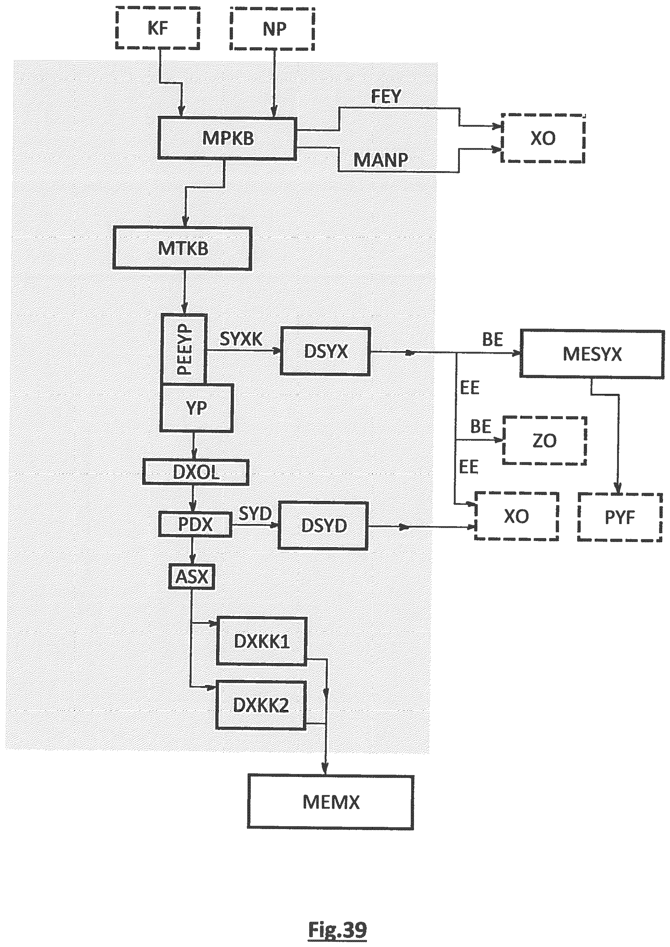

The figures referring to juicing of prickly pear fruit are (a) the arrangements / top & side views and sections in figures Fig. 1 to Fig. 20 (b) the Production Diagram in Fig. 39 and (c) the top & side views and sections for the Variation with the Electric Generator in figures Fig. 21 to Fig. 30, for which we have following:
Fig. 1: Left side view of the metal container (MEEK) according to the invention, showing the double-leaf side door with leaves (AFPT) & (DFPT), which door is mainly used for extracting the solid residues/waste of juicing process.
Fig. 2: Rear view of the metal container (MEEK) according to the invention, showing the double-leaf door with external leaves (AEFPT) & (DEFPT), which is mainly used for the input of fruits & shoots during the juicing process . The external leaves (AEFPT) & (DEFPT) with the internal folding leaves (APFPT, DPFPT) and the floor panels (ESFPD) & (EXFPD) are used to extend the active processing area of the workshop.
Fig. 3: Similarly to Fig. 2, is shown the right-hand side view of the double-leaf door as it is closed during the transport phase of movable laboratory by truck, having the floor level (EDA of the laboratory elevated relative to the ground level(EED).
Fig. 4: Similarly to Fig. 3, the side view of the container (MEEK) is shown with the side and back doors open, as they will be during the operation of the laboratory, as being elevated relative to the ground on the truck platform / trailer. The drawing reveals the extension of the internal foldable leaf (APFPT) of the left side leaf AEFPT of the rear double-leaf door. The purpose of the special design of the rear door leaves is to attach a second modular inner leaf/panel, which constitutes an increase of the active processing area of the laboratory in cooperation on one hand with the extension of the inner modular floor panels (Fig. 10 to Fig. 12) and on the other hand with the extension of the fabric or plastic roof cover (PT) (Fig. 6).
Fig. 5: Top view of the roof of the metal container with the two openings (AO1) & (AO2) which serve to enable the placement and removal (repairs and planned maintenance phases) of the juice tanks (DXKK1, DXKK2, DXBK1 & DXBK2) for opening (AO1), as well as of the hydraulic press (YP) for opening (AO2).
Fig. 6: in this figure are shown the same with Fig. 5 and furthermore the foldable fabric or plastic tent (TP) which serves to cover the space that is formed from the extended inner and outer leaves of the rear double-leaf door (Fig. 3 & Fig. 4) as well as the foldable floor (Fig. 10 to Fig. 12).
Fig. 7: Vertical Section A-A (with reference to Fig. 5) of the container (MEEK) where are shown (a) the roof openings (AO1) and (AO2) and (b) the metal panels of the foldable floor (FPD).
Fig. 8: Vertical Sections B-B and C-C (with reference to Fig. 6) of the container (MEEK) where (a) in Section B-B is shown the extension of the left foldable inner leaf (APFPT) and left outer leaf (AEFPT) of the rear double-leaf door as well as the extension of the foldable panels (ESFPD) & (EXFPD) of the metal floor of the rear double-leaf door (b) the Section C-C will be similar to Section B-B with the difference that instead of (APFPT) and (AEFPT) it would be (DPFPT) and (DEFPT) accordingly.
Fig. 9: Horizontal Section D-D (with reference to Fig. 7) of the closed metal container where are shown (a) the rear door floor folding panels (FPD) when they are closed /retracted (b) the closed leaves (AFPT) & (DFPT) of the side double-leaf door and (c) the closed inner and outer leaves of the rear double-leaf door.
Fig. 10: Top view as seen from the plane E-E (with reference to Fig. 8) of the container where are shown (a) the opened leaves (AFPT) & (DFPD) of the side double-leaf door (b) the extended panels (ESFPD) & (EXFPD) of the rear foldable floor and (c) the extended leaves (outer and foldable inner) of the rear double-leaf door.

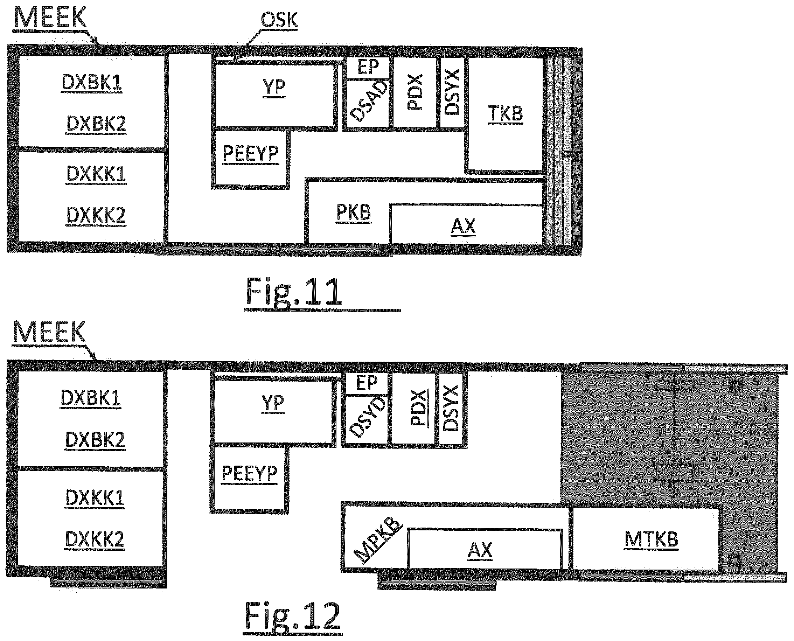

Fig. 11: Horizontal section of the interior of the Laboratory's Machinery and Equipment with closed doors, which constitutes the state of road transport by truck. During this phase, the Fruits Washing Machine (PKB) and Fruit Shredder (TKB) may be displaced from the position they will have during the operating phase.
Fig. 12: Horizontal section of the internal layout of the Machinery and Equipment of the Laboratory during the fruit & shoot juicing (operation) phase, where the floor of laboratory is elevated relative to the ground level. During this phase the sacks or fruit crates are deposited on the foldable metal floor and from there they are led to the washing machine (PKB) for removal of inert matter. After washing, the fruits are optionally led to the Fruit cutter (TKB), for slicing the fruits to facilitate the extraction of juices during the compression. From there, the sliced fruits are loaded into the stainless steel compression cylinder (with normally arranged holes and / or slots all over its surface), previously placed on the (PEEYP) input/output platform of the solid input/output processing matter of the hydraulic press (YP). After loading of fruits into the compression cylinder, the cylinder is led under the hydraulic press piston for direct compression. During the compression the fruits juice is collected in the hourly operation storage tank (DXOL). From there, the solid residue of juicing process (SYXK) is extracted from the perforated cylinder and either is stored in the solid residue storage tank (DSYX) within the laboratory, or it is removed from the laboratory through the side double-leaf door for disposal in the field (XO) as fertilizer or for feeding (ZO) the animals living in the field.
   The produced juices, through the pumping system (ASX), are led to the 1^{st} stage juice filtration machine (PDX) and from there to the daily tanks (DXKK1) & (DXKK2). The solid residue from the 1^{st} stage filtration (SYD) is initially stored in the tank (DSYD) within the laboratory and from there, at the end of the daily juicing process, it is disposed in the field for fertilizer. The Electrical distribution board will be designed in such a way that it will have two mechanically interlocked incomer switches for receiving power from both PPC and Electric Generator, for the case where there is a distributed PPC supply available in the field of cactus plants.

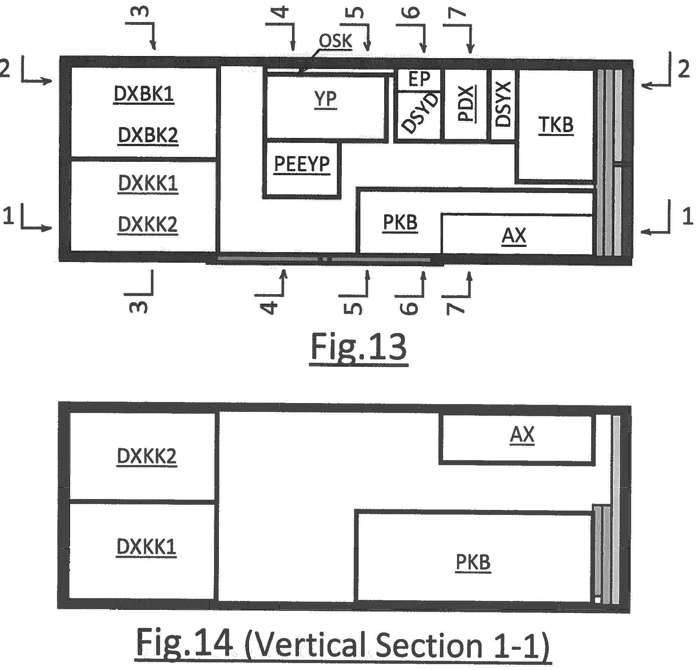

Fig. 13: Section Numbers on a Machinery and Equipment layout / arrangement as illustrated in Fig. 11.
Fig. 14 to Fig. 20: vertical and horizontal sections 1-1 to 7-7 (with reference to Fig. 13).
Fig. 21 to Fig. 30: show a variation of the Basic Machinery and Equipment arrangement of the invention, where by sacrificing some of the juice storage capacity, it is provided to the laboratory the opportunity to have in its equipment (housed within the container) also the necessary electric generator (EG). This since in the basic configuration of the invention has been considered that the necessary electrical generator (where required when no available electric power from PPC electric grid) will be transported by road, by a different vehicle (loaded or trailer) or by the same vehicle that carries the movable laboratory but out of it.
Fig. 39: constitutes the production diagram of the prickly pear fruit juicing process , as presented above in the analysis for Fig. 12 . In this diagram the qualitative and environmental advantages of the present invention are evident where (a) there is no need to remove the fruits peel (b) we retain the fruits peel with the thorns as well as the seeds, where by their characterization now as a solid residue (and in no case as solid waste as in the past) (SYX) of juicing process , it can be stored daily in the tank (DSYC) and be transported to the inductrial processing units (MESYX) (c) we have the ability to further exploit the solid residue (SYX) from the units (MESYX) to separate the pits and extract their oil to produce top quality cosmetic and pharmaceutical organic oils (d) we have the ability to store the daily produced juices in the cooling tanks (DXKK1) & (DXKK2) and transport them to the processing units (MEMX) for final processing of juices to Market products (e) we have the ability to directly dispose the solid residue (SYX) on the field (XO) as a fertilizer or as a feed (ZO) for animals that live there (f) we have the disposal of non-recycled washing water (MANP) directly in the field for irrigation and not its disposal to the Municipal Sewerage System.

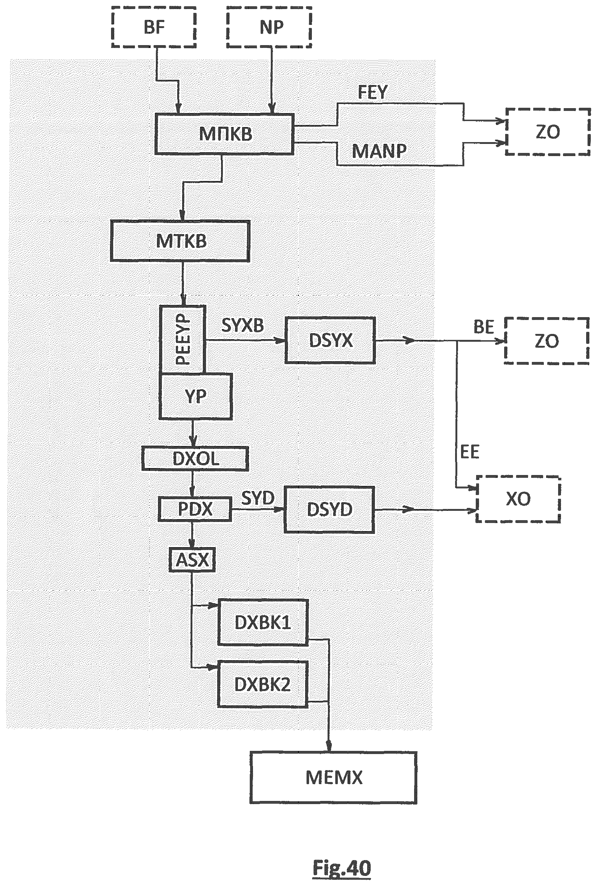

Fig. 40: constitutes the production diagram of the prickly pear shoots juicing process, which is representative for any juicing process of cactus shoots by using the innovating method of hydraulic direct cold press . For the juicing of prickly pear shoots are used the same machinery and equipment that is used for the juicing of prickly pear fruit and which equipment and machinery is illustrated in Fig. 11 to Fig. 30. The difference now with the juicing process of prickly pear shoots in comparison to the juicing process of fruits, is that solid residue of juicing process (since not containing the seeds) is only disposed directly in the field as fertilizer or feed for the animals that live there. For the rest the juicing process of shoots is similar to juicing process for fruits as described under figure Fig.12 and diagram Fig. 39, by just considering that the juices from shoots are eventually stored daily in the cooling tanks (DXBK1) and (DXBK2).

## Claims

1. Juicing method of cactus fruits and shoots at their place of production, by which can (a) have juicing of fruits and shoots by hydraulic compression and not by any type of rotary cutting / scrubbing and screw pressing mechanism (b)have juicing of fruits and shoots avoiding the need of removing (b1) the peel of fruits (b2) the bark of shoots (b3) the thorn of fruits and shoots and (b4) the seeds of fruits and (c) have development of extremely low temperature increase over the whole juicing process as compared this increase to the temperature of surrounding space.

2. By road movable complete cactus fruits and shoots juicing laboratory by the method of hydraulic direct cold press, housed in a suitably designed metal container (MEEK),with having roof openings, internal foldable leaves for rear & side doors , fordable tent and foldable floors for rear & side doors, and equipped with suitably arranged electrically movable and electrically powered machinery (YP, PDX, ASX, PKB, TKB), juice tanks (DXKK1, DXKK2, DXBK1, DXBK2, DXOL) and solid residue tanks (DSYX) & (DSYD) capable (a) to juice any kind of cactus fruit and shoot by the method of hydraulic direct cold press according to claim No.1 (b) to be transported (self-movable or on trailer) and installed in the cultivation fields of cactus plants (c) to contribute to the significant reduction of the overall time for juicing process , since the juicing process can take place in the fields of cactus plants (d) to contribute to the overall solving of the Managerial problem for the disposal of solid residues and washing water of juicing process, since they can be disposed in the fields for fertilizer and food for animals in case of solid residues and for irrigation in case of washing water (e) to contribute to the possibility of transferring the solid residues to industrial units for collection of fruit seeds and the production of organic oils for cosmetic and pharmaceutical use (f) to use common machinery for fruits and shoots juicing processes and (g) to require for its operation only the Electric Power Distribution Board (EP) connection with either an external electric generator (EG) or a Power Supply from the PPC elecric grid.
